# DEMANDE DE BREVET EUROPEEN

(11) **EP 1 852 278 A1**
(43) Date de publication de la demande: **07.11.2007**
(21) Numéro de dépôt: 07107008.0
(22) Date de dépôt: 26.04.2007
(51) Int. Cl.: B60C 17/06

(54) **Ensemble de roulage a plat comprenant un boudin mousse monté sur des barrettes de fixation**

(30) Priorité: 05.05.2006 FR 0604168
(71) Demandeur: Société de Technologie Michelin, 63000 Clermont-Ferrand (FR); Michelin Recherche et Technique, 1763 Granges-Paccot (CH)
(72) Inventeur: Fayol, Martial, 63530 Volvic (FR); Mahinc, Stéphanie, 63000 Clermont-Ferrand (FR); Tramond, Philippe, 63230 Saint Ours les Roches (FR)
(74) Mandataire: Lasson, Cédric Y. M.

(57) **Abrégé**

Ensemble (1) formé d'une roue comprenant une jante (3) comportant des sièges (31,32) destinés à recevoir les talons (21,22) d'un pneumatique (2), destiné à être utilisé avec un boudin (4) en caoutchouc alvéolaire de forme sensiblement toroïdale qui permet de rouler à l'état dégonflé, ladite jante (3) ayant une gorge (30), destinée à recevoir la semelle (40) dudit boudin (4), dont la section méridienne présente en chacun des bords de ladite gorge (30) des protubérances (301,302) s'étendant sensiblement dans la direction axiale et situées radialement au dessus du fond de la gorge (303), des barrettes (5) étant disposées axialement, sur la circonférence de la semelle (40) dudit boudin (4), chaque barrette comportant à ses deux extrémités une lame de ressort (51,52) dont la forme est adaptée pour collaborer avec la protubérance (301,302) sous laquelle ladite lame (51,52) est engagée, de manière à bloquer le déplacement radial de la semelle (40) du boudin (4) à laquelle ladite barrette (5) est liée.

## Description

L'invention concerne les ensembles de roulage aptes à rouler à pression réduite et destinés à équiper les véhicules automobiles. Ces ensembles comportent une jante dotée d'une valve, un pneumatique, et enferment un boudin de forme approximativement toroïdale.

Ce boudin, plus communément dénommé boudin mousse, est généralement réalisé en caoutchouc alvéolaire à cellules fermées. Il est destiné à supporter la charge en cas de perte de pression du pneumatique. Les alvéoles peuvent, dans certains cas, contenir un gaz sous pression.

Lorsque, à la pression d'utilisation, on souhaite éviter que le boudin n'occupe tout l'espace intérieur délimité par la jante et le pneumatique, il est nécessaire de maintenir la semelle dudit boudin en contact étroit avec la jante pour contenir les effets liés à la force centrifuge dont l'action a tendance à plaquer le boudin contre la paroi interne supérieure du pneumatique. Cette disposition s'avère particulièrement utile pour prolonger la durée de vie du boudin.

Aussi, de nombreuses solutions techniques ont été mises en oeuvre et, au delà des problèmes qu'elles sont censées résoudre, présentent également des inconvénients particuliers.

A titre d'exemple, il a été proposé de renforcer la semelle avec des nappes de renfort aptes à maintenir sensiblement constante la circonférence intérieure du boudin. Cette solution s'avère efficace mais requière l'utilisation d'une jante et d'un pneumatique d'un type particulier, tel que des jantes dites à siège inversés présentant des diamètres de sièges différents, pour autoriser le montage d'un pneumatique contenant un boudin dont la circonférence est fixe sur la jante.

Une autre solution consiste à créer une dépression sous la semelle de manière à utiliser la différence de pression entre la pression régnant à l'intérieur du pneumatique et la pression extérieure pour maintenir le boudin en place sous la jante. Cette solution autorise l'utilisation d'une jante et d'un pneumatique de type classique, mais l'effet ventouse dont il est fait usage présente néanmoins l'inconvénient de ne pouvoir être efficace que dans une gamme limitée de vitesse.

L'invention a pour objet de proposer une solution alternative intéressante à ces solutions techniques connues tout en offrant des avantages particuliers liés à sa grande facilité de mise en oeuvre.

L'ensemble selon l'invention est formé d'une roue comprenant une jante comportant des sièges destinés à recevoir les talons d'un pneumatique, ledit pneumatique étant destiné à être utilisé avec un boudin en caoutchouc alvéolaire de forme sensiblement toroïdale qui permet de rouler à l'état dégonflé.

Ladite jante comporte une gorge, destinée à recevoir la semelle dudit boudin. La section méridienne de ladite gorge présente en chacun de ses bords des protubérances s'étendant sensiblement dans la direction axiale et situées radialement au dessus du fond de la gorge.

Des barrettes sont disposées axialement, sur la circonférence de la semelle du boudin. Chaque barrette comporte à ses deux extrémités une lame de ressort dont la forme est adaptée pour collaborer avec la protubérance sous laquelle ladite lame est engagée.

Lors de l'assemblage du pneumatique contenant un boudin comportant des barrettes du type de celles décrites ci-dessus sur une jante disposant de protubérances adaptées, les lames de ressort s'engagent sous la partie de la protubérance faisant face au fond de gorge de manière à éviter tous les mouvements dans la direction radiale des barrettes, et du boudin à laquelle lesdites barrettes sont liées.

En déterminant judicieusement la forme du ressort par rapport à la forme de la protubérance, comme cela sera expliqué en détail dans la description, il est possible d'obtenir un accrochage de la semelle du boudin sur le fond de jante ayant des propriétés mécaniques permettant une utilisation de l'ensemble à des vitesses élevées.

De plus, l'espace entre deux barrettes étant libre, il est possible de faire varier la circonférence du boudin, et en particulier d'en augmenter légèrement la circonférence en exerçant des efforts raisonnables. Cette propriété, qui repose sur le caractère sensiblement élastique du boudin, s'avère particulièrement intéressante lorsque les sièges destinés à recevoir les talons du pneumatique ont un diamètre supérieur au diamètre du fond de la gorge sur lequel repose la semelle du boudin. Le montage du boudin sur la jante peut alors s'effectuer par simple extension de la circonférence du boudin, de manière à lui permettre de passer au dessus des sièges de la jante. En relâchent l'effort, le boudin revient à son diamètre nominal, et la semelle vient se plaquer contre le fond de la gorge provoquant de ce fait l'engagement des lames de ressort sous les protubérances destinées à les recevoir.

De cette manière on obtient un ensemble facile à assembler et présentant les qualités mécaniques de maintien de la semelle du boudin sur la jante permettant de supporter des roulages à grande vitesse.

La description qui suit s'appuie sur les figures permettant d'illustrer un mode de réalisation préférentiel de l'invention dans lesquelles,
- la figure 1 représente une vue schématique en coupe méridienne d'un pneumatique comportant un boudin selon l'invention,
- la figue 2 représente une vue schématique en coupe méridienne d'un pneumatique contenant un boudin selon l'invention monté sur une jante avant que les lames de ressorts ne soient engagées sous les protubérances,
- la figure 3 représente une vue schématique en coupe méridienne de l'ensemble un fois les lames de ressort engagées,
- la figure 4 représente une vue schématique en perspective d'un boudin selon l'invention,
- la figure 5 représente une vue schématique en coupe méridienne d'une première forme de réalisation des lames de ressort,
- la figure 6 représente une vue schématique en perspective de la barrette correspondant à cette première forme de réalisation,
- la figure 7 représente une vue schématique en coupe méridienne d'une seconde forme de réalisation des lames de ressort,
- les figures 8 et 9 représentent deux variantes de réalisation des barrettes correspondant à cette seconde forme de réalisation.

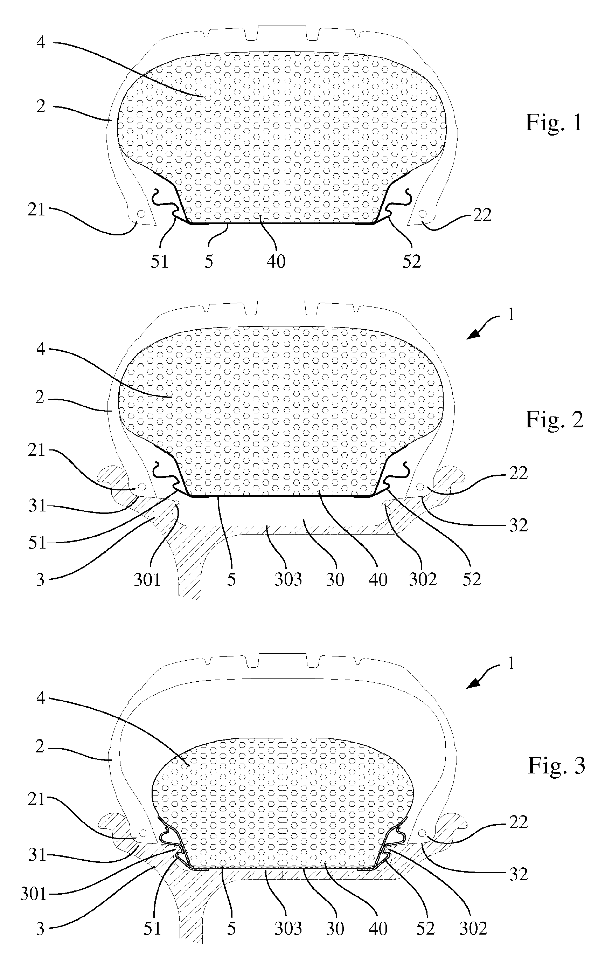

La figure 1 représente un boudin mousse 4 selon l'invention placé dans un pneumatique 2, comportant des bourrelets 21 et 22. Une barrette 5 est fixée sur la semelle 40 du boudin. Aux deux extrémités de la barrette 5 sont représentées les lames de ressort 51 et 52.

La figure 2 permet de visualiser la jante 3 sur laquelle sont disposés les sièges 31 et 32 destinées à recevoir les bourrelets 21 et 22 du pneumatique 2. La jante 3 comporte une gorge 30 placées entre les deux sièges 31 et 32. Le fond 303 de la gorge 30, qui est sensiblement parallèle à l'axe de rotation de la jante, est aménagé pour recevoir la semelle 40 du boudin 4. De manière préférentielle, le fond 303 de la gorge 30 est disposé à un diamètre inférieur au diamètre des sièges 31 et 32.

Des protubérances 301 et 302 sont disposées sur chacun des bords de la gorge 30 radialement au-dessus du fond de la gorge et s'étendent dans une direction sensiblement axiale. Ces protubérances 301 et 302 présentent une partie de leur surface faisant face au fond de la gorge 303.

La figure 3 permet de visualiser l'accrochage du boudin 4 sur la jante 3 par l'intermédiaire des lames de ressort 51 et 52 lorsque la semelle 40 est placée sur le fond 303 de la gorge 30. Les lames de ressort 51 et 52 viennent engager la partie inférieure des protubérances 301 et 302 et reposent sur la face de la protubérance faisant face au fond de la gorge 303, empêchant de ce fait le mouvement de la barrette et du boudin mousse dans la direction radiale.

L'engagement des lames de ressort peut se faire sous l'action des forces de serrage élastique obtenue par un choix approprié du diamètre intérieur du boudin ou d'une pression exercée sur la bande de roulement une fois le montage réalisé. On observe également que sous l'effet de la pression de gonflage le boudin mousse va se contracter, ce qui a également pour effet de presser le boudin sur la jante et d'engager les lames de ressort 51 et 52.

La lame 51, 52 glisse entre le flanc du boudin et le bord axialement intérieur de la protubérance 301, 302. cette opération est grandement facilitée du fait de la nature élastique du matériau constituant le boudin mousse. Une fois ce passage franchi, la lame, (51, 52) est alors libre de se déplacer axialement vers l'extérieur pour engager la protubérance 301, 302. La forme du ressort à lame 51, doit être adaptée pour venir se loger dans l'espace compris entre la protubérance 301 et le fond 303 de la gorge 30.

On observera par ailleurs que, pour augmenter la résistance à la traction dans la direction radiale de l'accrochage entre le boudin mousse 4 et la jante 3, il est intéressant d'orienter le ressort à lame 51 dans une direction sensiblement radiale.

Afin d'éviter tout désengagement intempestif du ressort à lame 51 de son logement on s'arrangera pour que la paroi de la partie basse du flanc du boudin vienne bloquer les mouvements dudit ressort à lame dans la direction axiale. Cette configuration peut être obtenue en adaptant la géométrie du boudin mousse pour qu'un contact puisse être établi entre le flanc du boudin 4 et le bord de la protubérance 301, 302, une fois le ressort à lame engagé dans son logement.

Les matériaux choisis pour réaliser la barrette 5 et le ressort à lame 51 peuvent être de natures diverses. Une première forme de réalisation consiste à utiliser une barrette métallique 5 sur laquelle des ressorts à lame métallique 51 et 52 sont soudés.

Il est également possible de réaliser des barrettes 5 à partir de matériaux thermoplastique dont les caractéristiques mécaniques sont adaptées pour conférer les propriétés mécaniques et élastiques souhaitées.

La liaison entre la semelle 40 et la barrette 5 peut s'effectuer par collage ou par insertion de la barrette dans la semelle lors du moulage du boudin.

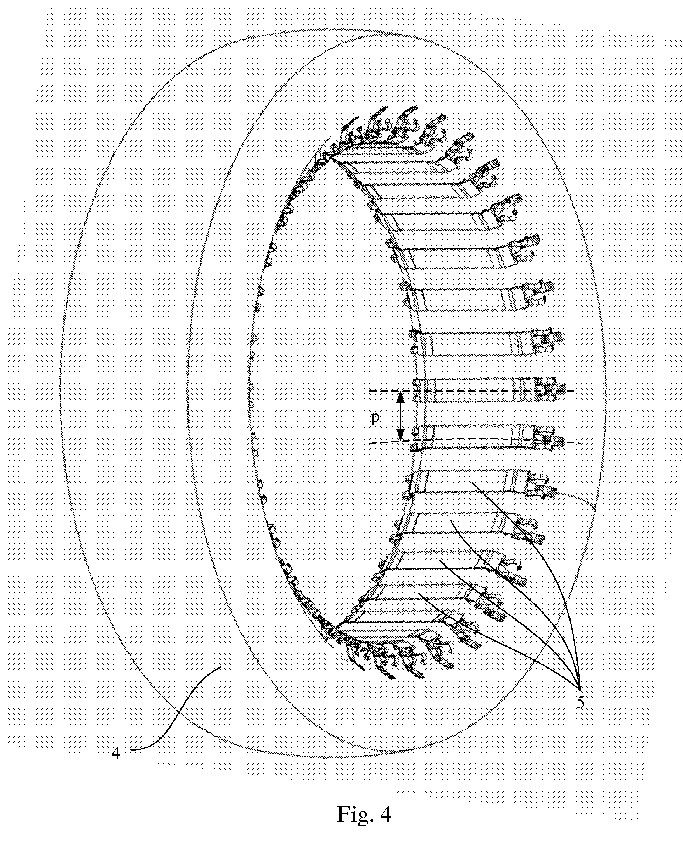

La figure 4 illustre un boudin mousse 4 conforme à l'invention dans lequel les barrettes ont été disposées circonférentiellement sur la semelle et espacées entre elles d'un pas "p" donné. Ce pas est déterminé en fonction du nombre de barrettes qu'il est nécessaire de placer pour obtenir la résistance mécanique souhaitée tout en préservant l'élasticité circonférentielle du boudin pour autoriser le montage. En pratique un espacement sensiblement égal à la largeur de la barrette permet d'obtenir le compromis désiré.

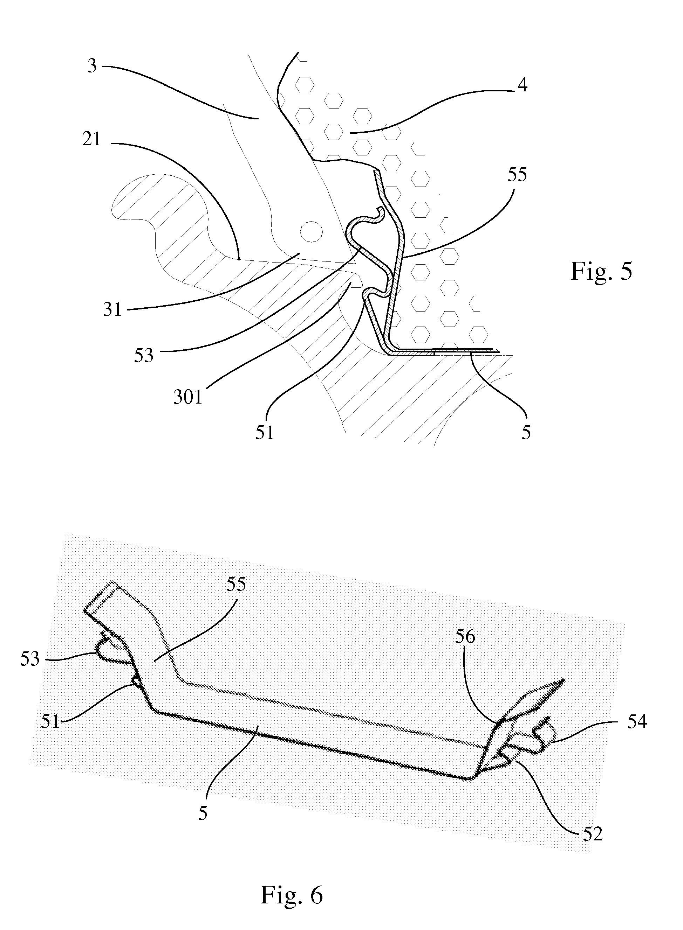

Les figures 5 à 9 permettent d'illustrer deux formes de réalisation particulièrement avantageuses des barrettes.

En effet, il peut s'avérer nécessaire de procéder au démontage de l'ensemble formé par le pneumatique et le boudin mousse, par exemple, lorsque l'on désire remplacer le boudin mousse après un usage prolongé en mode dégonflé.

Toujours selon l'invention, il est proposé de munir les lames de ressort 51, 52, d'une extension 53, 54, prolongeant chacune des lames 51, 52 dans une direction sensiblement dirigée radialement vers l'extérieur, et placées, dans cette direction, au dessus de la protubérance 301, 302. La forme de l'extension 53, 54 est adaptée pour contourner la protubérance 301, 302, et permettre ainsi de désengager la lame de ressort de la protubérance.

De façon préférentielle les extensions 53, 54 ont une forme générale en S. La partie basse du S, située radialement vers l'intérieur, contourne la protubérance, et la partie haute du S, située radialement vers l'extérieur, est disposée radialement au-dessus de la protubérance. Lorsque le talon 21 exerce une poussée dans la direction axiale, la lame de ressort 51 se désengage de la protubérance 301 et autorise le mouvement du boudin dans la direction radiale

Les figures 5 et 6 permettent de visualiser un premier mode de réalisation de l'extension 53. On observe également que le débattement axial nécessaire au mouvement du ressort à lame 51, 52 est obtenu par une mise en compression du flanc du boudin 4.

De cette manière il est possible de procéder au démontage de l'ensemble sans devoir introduire un outillage particulier pour désolidariser le boudin 4 de la jante 3.

La figure 5 montre également une forme de réalisation particulière de la barrette 5 dans laquelle ladite barrette est munie de renforcements latéraux 55, 56 s'étendant le long de la paroi latérale de la partie inférieure du flanc du boudin 4. Ces renforcements ont pour objet de limiter, dans une certaine mesure, l'extension radiale du boudin lorsque celui-ci est soumis aux contraintes des forces centrifuges.

La figure 6 montre une barrette 5 présentant à ses deux extrémités des renforcements latéraux 55 et 56 ainsi que des lames de ressort 51 et 52 munies d'une extension 53 et 54.

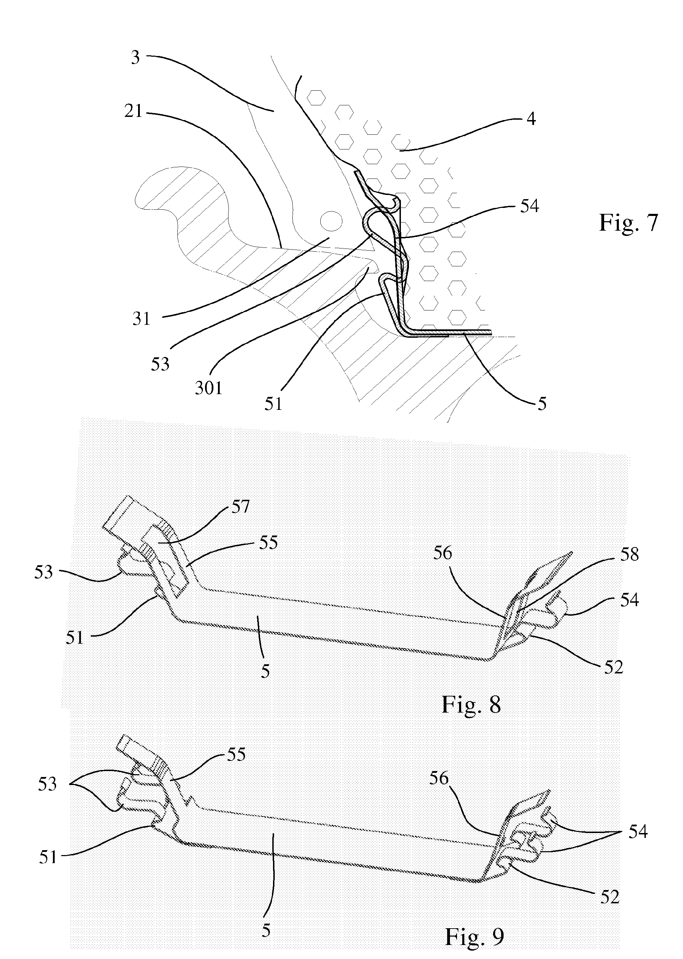

Les figures 7 à 9 décrivent une autre forme de réalisation particulière, dans laquelle on autorise la lame de ressort à se mouvoir axialement librement au-delà de la surface formée par les renforcements latéraux 55 et 56.

Dans la configuration décrite dans les figures 5 et 6 on observe que, lorsque le talon 21 du pneumatique exerce une poussée sur l'extension 53, ladite extension vient porter sur le renforcement latéral 55 de manière à déformer le flanc du boudin 4. Toutefois la poussée qu'il est nécessaire d'exercer sur l'extension 53 pour désengager le ressort 51 peut, dans certains cas, être relativement élevée. Cette situation se produit lorsque la largeur de la barrette est telle que la surface du renforcement en contact avec le flanc du boudin est importante ou encore lorsque les propriétés élastiques du boudin sont relativement faibles.

Cette situation peut présenter une gêne pour l'opérateur, ou être la cause d'une dégradation du ressort.

Dans ces conditions il est proposé de pratiquer une ouverture 57, 58 dans le renforcement 55, 56, comme cela est illustré à la figure 8 ou encore de diviser la lame de ressort 51, 52 et son extension53, 54 en deux parties aptes à se mouvoir séparément dans la direction axiale des deux cotés du renforcement 55 comme cela est illustré à la figure 9.

De cette manière, le ressort peut pénétrer axialement plus facilement dans le flanc du boudin mousse lorsque le talon 21 agit sur l'extension 53 pour libérer le ressort 51 de la protubérance 301 comme cela est illustré à la figure 7.

## Revendications

1. Ensemble (1) formé d'une roue comprenant une jante (3) comportant des sièges (31, 32) destinés à recevoir les talons (21, 22) d'un pneumatique (2), ledit pneumatique (2) étant destiné à être utilisé avec un boudin (4) en caoutchouc alvéolaire de forme sensiblement toroïdale qui permet de rouler à l'état dégonflé, ladite jante (3) ayant une gorge (30), destinée à recevoir la semelle (40) dudit boudin (4), dont la section méridienne présente en chacun des bords de ladite gorge (30) des protubérances (301, 302) s'étendant sensiblement dans la direction axiale et situées radialement au dessus du fond de la gorge (303), **caractérisé en ce que** des barrettes (5) sont disposées axialement, sur la circonférence de la semelle (40) dudit boudin (4), chaque barrette comportant à ses deux extrémités une lame de ressort (51, 52) dont la forme est adaptée pour collaborer avec la protubérance (301, 302) sous laquelle ladite lame (51, 52) est engagée, de manière à bloquer le déplacement radial de la semelle (40) du boudin (4) à laquelle ladite barrette (5) est liée.

2. Ensemble selon la revendication 1, dans lequel les barrettes sont espacées circonférentiellement les unes des autres d'un pas (p) déterminé.

3. Ensemble selon la revendication 1 ou 2, dans lequel le fond de la gorge (303) est situé radialement en dessous des sièges (31, 32).

4. Ensemble selon la revendication 3, dans lequel chaque lame de ressort comporte une extension (53, 54) prolongeant lesdites lames (51, 52) dans une direction sensiblement dirigée radialement vers l'extérieur, placées dans cette direction au dessus de la protubérance (301, 302) et dont la forme est adaptée pour contourner ladite protubérance et permettre de désengager la lame de ressort (51, 52) de la protubérance (301, 302) lorsque le talon (21, 22) du pneumatique (4) exerce une poussée axiale sur ladite extension (53, 54).

5. Ensemble selon la revendication 4, dans lequel la barrette (5) comporte des renforcements latéraux (55, 56) s'étendant le long de la paroi de la partie inférieure du flanc du boudin (4).

6. Ensemble selon la revendication 5, dans lequel le renforcement latéral (55, 56) de la barrette comporte une ouverture (57, 58) autorisant la lame de ressort (51, 52, 53, 54) à se mouvoir axialement librement au delà de la surface délimitée par ledit renforcement latéral (55, 56) lorsque le talon (21, 22) du pneumatique (4) exerce une poussée axiale sur l'extension (53, 54) de ladite lame de ressort (51, 52).

7. Ensemble selon la revendication 5, dans lequel la lame de ressort (51, 52, 53, 54) est divisée en deux parties aptes à se mouvoir séparément axialement librement des deux cotés du renforcement latéral (55, 56) au delà de la surface délimitée par ledit renforcement latéral (55, 56) lorsque le talon (21, 22) du pneumatique (4) exerce une poussée axiale sur l'extension (53, 54) de ladite lame de ressort (51, 52).
